# EUROPEAN PATENT APPLICATION

(11) **EP 4 549 341 A1**
(43) Date of publication of application: **07.05.2025**
(21) Application number: 22949298.8
(22) Date of filing: 28.06.2022
(51) Int. Cl.: B65G 1/00

(54) **TRANSPORT DEVICE, TRANSPORT SYSTEM, AND TRANSPORT METHOD**

(71) Applicant: Fuji Corporation, Chiryu-shi, Aichi 472-8686 (JP)
(72) Inventor: SAWANAMI Hisato, Chiryu-shi, Aichi 472-8686 (JP); KAWAGUCHI Koji, Chiryu-shi, Aichi 472-8686 (JP); ODA Takuya, Chiryu-shi, Aichi 472-8686 (JP)
(74) Representative: Grünecker Patent- und Rechtsanwälte PartG mbB
(86) International application number: PCT/JP2022/025706
(87) International publication number: WO 2024/004021

(57) **Abstract**

A conveyance device of the present disclosure is a device configured to convey a cart loaded with a conveyance target object, and the device includes a drive section configured to connected to the cart and to travel, a reading section configured to read identification information that is provided on the cart or the conveyance target object and that is for identifying category information of the conveyance target object, and a control section configured to acquire the category information of the conveyance target object from the identification information read by the reading section, acquire a conveyance destination of the conveyance target object based on the acquired category information, and control the drive section to convey the cart to the acquired conveyance destination.

## Description

### Technical Field

The present description discloses a conveyance device, a conveyance system, and a conveyance method.

### Background Art

There has been known a conveyance system including a cart on which a conveyance target object can be loaded and a conveyance device that conveys the cart to a destination. For example, Patent Literature 1 discloses that an identification sign is provided on a cart, which is associated with the identification information of the cart itself and the conveyance destination information of the cart, and that a conveyance device reads the conveyance destination information contained in the identification sign and conveys the cart to the conveyance destination.

### Citation List

### Patent Literature

Patent Literature 1:JP-A-2021-86205

### Summary of the Invention

### Technical Problem

It is desired to convey a conveyance target object by category more efficiently.

The main purpose of the present disclosure is to convey a conveyance target object by category more efficiently.

### Solution to Problem

A conveyance device of the present disclosure is a conveyance device configured to convey a cart loaded with a conveyance target object, the device including:
a drive section configured to be connected to the cart and travel;
a reading section configured to read identification information that is provided on the cart or the conveyance target object and that is for identifying category information of the conveyance target object; and
a control section configured to acquire the category information of the conveyance target object from the identification information read by the reading section, acquire a conveyance destination of the conveyance target object based on the acquired category information, and control the drive section to convey the cart to the acquired conveyance destination.

This conveyance device reads identification information, acquires category information of the conveyance target object from the read identification information, acquires a conveyance destination corresponding to the acquired category information, and conveys the cart to the acquired conveyance destination. Thus, it is possible to convey a conveyance target object by category more efficiently.

A conveyance system of the present disclosure is a conveyance device configured to convey a cart loaded with a conveyance target object, the system including:
a determination section configured to determine a conveyance destination of the conveyance target object based on category information, and
a conveyance device that includes:
   a drive section configured to be connected to the cart and travel;
   a reading section configured to read identification information that is provided on the cart or the conveyance target object and that is for identifying the category information of the conveyance target object; and
   a control section configured to acquire the category information of the conveyance target object from the identification information read by the reading section, acquire a conveyance destination of the conveyance target object determined by the determination section based on the acquired category information, and control the drive section so that the cart is conveyed to the acquired conveyance destination.

This conveyance system has the same effects as the conveyance device of the present disclosure.

A conveyance method of the present disclosure is a method for conveying a cart loaded with a conveyance target object, the method including:
reading identification information that is provided on the cart or the conveyance target object and that is for identifying category information of the conveyance target object to acquire the category information of the conveyance target object from the identification information;
determining a conveyance destination of the conveyance target object based on the acquired category information; and
conveying the cart to the determined conveyance destination.

This conveyance method has the same effects as the conveyance device and the conveyance system of the present disclosure.

### Brief Description of Drawings

Fig. 1 is a schematic view showing an example of conveyance system 1.
Fig. 2 is a perspective view showing an example of basket cart 12.
Fig. 3 is a perspective view showing an example of conveyance robot 40.
Fig. 4 is a side view showing a state in which conveyance robot 40 is connected to basket cart 12.
Fig. 5 is a front view showing a state in which conveyance robot 40 is connected to basket cart 12.
Fig. 6 is a flowchart showing an example of a routine for creating category-specific conveyance area information.
Fig. 7 is a view showing an example of screen Im1 for creating category-specific conveyance area information.
Fig. 8 is a view showing an example of category-specific conveyance area information 63.
Fig. 9 is a flowchart showing an example of a routine for creating ID-specific category information.
Fig. 10 is a view showing an example of screen Im2 for creating ID-specific category information.
Fig. 11 is a view showing an example of ID-specific category information 64.
Fig. 12 is a flowchart showing an example of a cart conveyance routine.
Fig. 13A is a view showing how conveyance robot 40 connects to and conveys (tows) basket cart 12.
Fig. 13B is a view showing how conveyance robot 40 connects to and conveys (tows) basket cart 12.
Fig. 13C is a view showing how conveyance robot 40 connects to and conveys (tows) basket cart 12.
Fig. 13D is a view showing how conveyance robot 40 connects to and conveys (tows) basket cart 12.
Fig. 14 is a flowchart showing an example of a routine for determining a conveyance destination.
Fig. 15 is a view showing an example of placement location usage information 65.

### Description of Embodiments

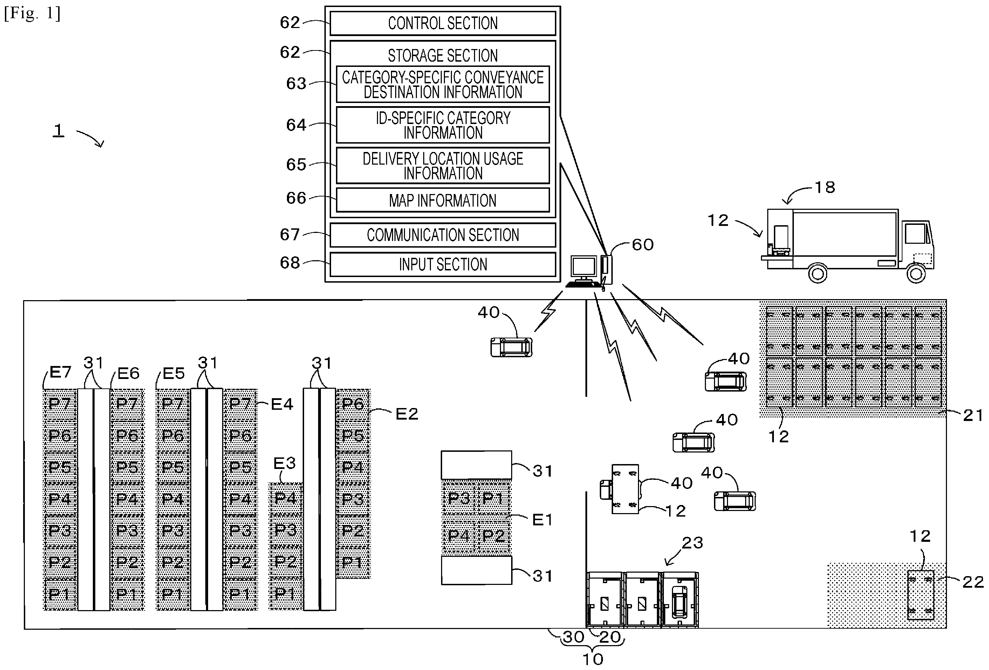

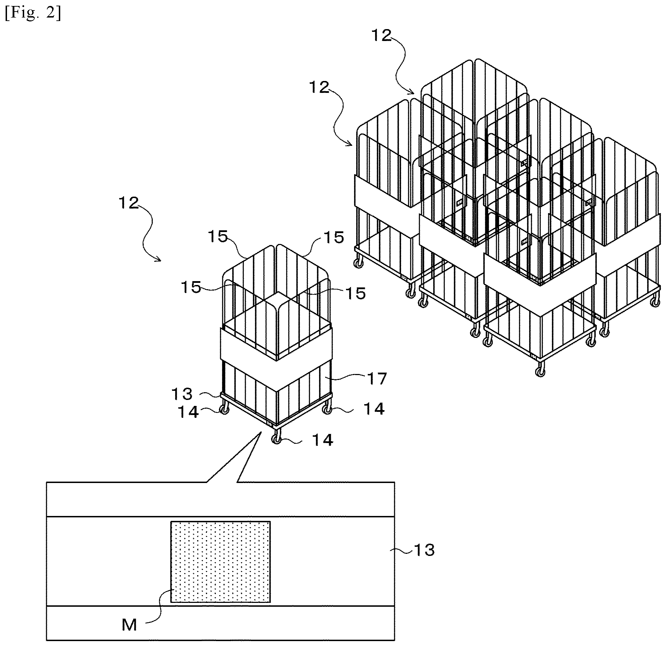

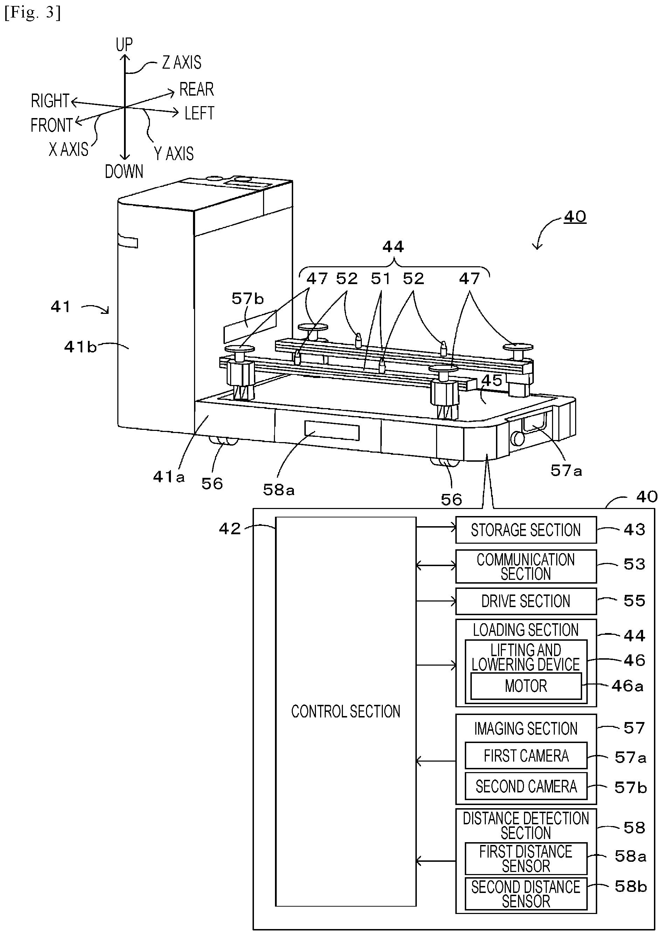

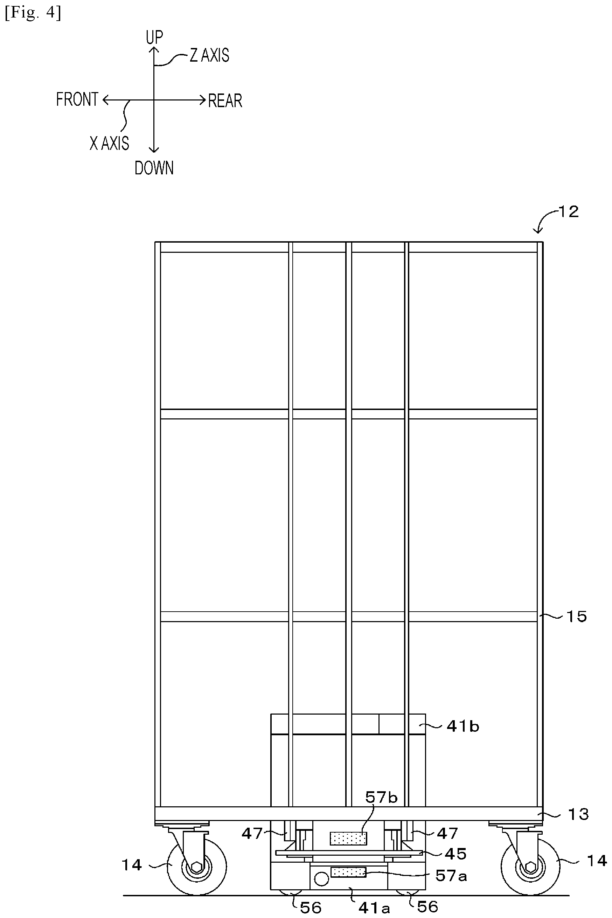

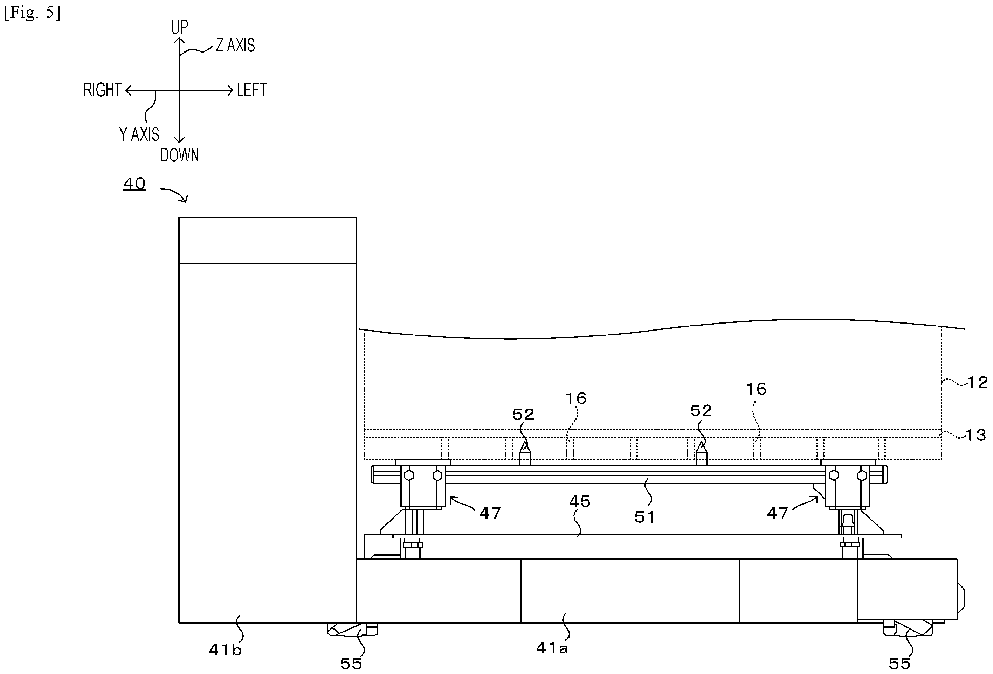

Next, an embodiment for carrying out the invention of the present disclosure will be described with reference to the drawings. Fig. 1 is a schematic view showing an example of conveyance system 1. Fig. 2 is a perspective view showing an example of basket cart 12. Fig. 3 is a perspective view showing an example of conveyance robot 40. Fig. 4 is a side view showing a state in which conveyance robot 40 is connected to basket cart 12. Fig. 5 is a front view showing a state in which conveyance robot 40 is connected to basket cart 12. The X-axis direction (left-right direction), Y-axis direction (front-rear direction), and Z-axis direction (up-down direction) are as shown in Figs. 3 to 5.

Conveyance system 1 is designed to automatically convey product 17 (conveyance target object) from warehouse 20 to sales section 30 for each category in store 10. The category is information for classifying product 17. For example, the category can be freely set. For example, the category may be set by an operator. In addition, for example, the category may be a type of product 17 (for example, beverages, kitchenware, home appliances, daily necessities, and the like) or a symbol for classifying product 17, or the like. The category may be information indicating another classification. As shown in Fig. 1, conveyance system 1 includes conveyance robot 40 and management device 60.

Prior to the description of conveyance system 1, store 10 to which conveyance system 1 is applied and product 17 (basket cart 12), which is the conveyance target object by conveyance system 1, are described. Store 10 has warehouse 20 for temporarily storing product 17 (basket cart 12) and sales section 30 for selling product 17. Warehouse 20 is a place for temporarily storing product 17 to be sold on sales section 30. Product 17 stored in warehouse 20 are delivered by delivery vehicle 18 while being placed on basket cart 12. Warehouse 20 has product placement area 21, temporary placement area 22, and standby space 23, as shown in Fig. 1.

Product placement area 21 is a place for temporarily storing product 17 (basket cart 12) delivered by delivery vehicle 18. Temporary placement area 22 is a place for temporarily placing product 17 (basket cart 12) that cannot be conveyed to sales section 30. Standby space 23 is a place for conveyance robot 40 to stand by when conveyance robot 40 is not conveying basket cart 12 (product 17). In addition, a charging device (not shown) is placed in standby space 23. The charging device is provided in standby space 23 and charges the driving storage battery provided in conveyance robot 40 when conveyance robot 40 is in standby. This charging device charges storage batteries using a wireless charging method, for example, either electromagnetic induction, magnetic field resonance, or electric field coupling. Alternatively, the charging device may be wired by a plug system to charge the storage battery. The charging device may, for example, start charging when receiving a signal from conveyance robot 40, or may start charging when detecting conveyance robot 40 with a sensor not shown.

Sales section 30 is a place where conveyed product 17 is displayed for sale. Sales section 30 has multiple display shelves 31 for displaying product 17 (see Fig. 2) by category, as shown in Fig. 1. On sales section 30, the operator displays conveyed product 17 in a state of being placed on basket cart 12, on display shelves 31. On sales section 30, conveyance areas (conveyance areas E1 to E7 in the present embodiment) are defined according to the category of product 17. Conveyance areas E1 to E7 are the areas in front of each of display shelves 31. Conveyance areas E1 to E7 each have at least one cart placement location (conveyance area E1 has cart placement locations P1 to P4, conveyance area E2 has cart placement locations P1 to P6, conveyance area E3 has cart placement locations P1 to P4, and conveyance areas E4 to E7 have cart placement locations P1 to P7). These cart placement locations are lined up along display shelves 31 of product 17 in the corresponding conveyance area.

Basket cart 12 has loading portion 13, casters 14, and fence members 15, as shown in Fig. 2. Loading portion 13 is a flat plate-shaped member on which an article is loaded. On the lower surface of loading portion 13, there is grid-like downward protruding engaged portion 16 (see Fig. 5). Caster 14 has a wheel that enables basket cart 12 to travel and is provided at the four corners on the lower surface of loading portion 13. Fence member 15 is a member to prevent product 17 placed on loading portion 13 from falling from loading portion 13, and is placed to stand up from the upper periphery of loading portion 13. Marker M is attached to basket cart 12. Marker M is a recognition target that indicates the ID (identification information) of product 17 placed on basket cart 12. Marker M is, for example, an AR marker. Marker M, for example, is created by the operator and attached to basket cart 12 at the timing when product 17 (basket cart 12) is delivered by delivery vehicle 18 and placed in product placement area 21. Marker M is attached to the side surface of loading portion 13 so that marker M can be recognized by conveyance robot 40.

Conveyance robot 40 is a vehicle that automatically conveys basket cart 12 as a conveyance item. This conveyance robot 40 enters the space between casters 14 on the lower surface side of loading portion 13 of basket cart 12, engages with engaged portion 16, connects to basket cart 12, and tows basket cart 12. This conveyance robot 40 is configured, for example, as an autonomous mobile robot (AMR) that detects the surroundings thereof and moves along a free route. As shown in Fig. 3, conveyance robot 40 has vehicle body section 41, control section 42, storage section 43, loading section 44, communication section 53, drive section 55, traveling wheels 56, imaging section 57, and distance detection section 58.

Vehicle body section 41 is an enclosure that has a substantially L-shaped shape in frontal view and can dive into the lower surface of basket cart 12. Vehicle body section 41 has horizontal section 41a and upright section 41b. Horizontal section 41a is a flat plate portion that can dive into the lower surface of basket cart 12. Horizontal section 41a has traveling wheels 56 on the lower surface side and loading section 44 on the upper surface side. Upright section 41b is connected to the end of horizontal section 41a and stands higher than horizontal section 41a. The interior of upright section 41b houses control section 42, storage section 43, communication section 53, and storage batteries.

Control section 42 is a controller that controls the entire device of conveyance robot 40. This control section 42 outputs control signals, and the like to drive section 55, imaging section 57, and communication section 53, and also receives data and signals from imaging section 57, distance detection section 58, and communication section 53. Control section 42 acquires images of the surroundings from imaging section 57 (first camera 57a and second camera 57b) as well as the distance to surrounding objects from distance detection section 58 every predetermined time (minute time) while conveyance robot 40 is traveling, and recognizes the self-position (3D coordinates) of conveyance robot 40 in store 10 based on the surrounding images, map information, and drive status of drive section 55.

Storage section 43 stores various application programs and various data files. Storage section 43 stores, for example, location information including the location of the conveyance destination when moving basket cart 12 and map information of store 10. The location information and map information is acquired via communication from management device 60.

Loading section 44 is connected to basket cart 12 by moving upward from vehicle body section 41 (horizontal section 41a) of conveyance robot 40 and engaging with engaged portion 16 of basket cart 12 (see Figs. 4 and 5). Loading section 44 has lifting and lowering section 45, elastic support member 47, coupling member 51, and engaging member 52. Lifting and lowering section 45 is a substantially rectangular-shaped member that can move vertically with respect to vehicle body section 41 by using motor 46a of lifting and lowering device 46 as a drive source.

Elastic support member 47 is a member that elastically supports loading portion 13 of basket cart 12 from the lower surface. Elastic support members 47 are provided at each of the four corners of lifting and lowering section 45. Coupling member 51 is a member for coupling elastic support members 47 lined up on the left and right. Engaging member 52 engages with engaged portion 16 formed on the lower surface of loading portion 13 in basket cart 12 when basket cart 12 is conveyed. Engaging member 52 is a pin-shaped member protruding upward from coupling member 51. Engaging member 52 is positioned lower than the bottom of basket cart 12 (loading portion 13) when lifting and lowering section 45 is positioned at the lowest position by lifting and lowering device 46. The position of engaging member 52 at this time is referred to as an initial position. On the other hand, in a state where vehicle body section 41 (horizontal section 41a) is under basket cart 12 (loading portion 13) and lifting and lowering device 46 lifts lifting and lowering section 45 (engaging member 52), engaging member 52 engages with engaged portion 16 (see Figs. 4 and 5).

Communication section 53 is an interface that wirelessly exchanges information with external devices such as management device 60. Control section 42 exchanges information with management device 60 via communication section 53.

Drive section 55 includes motors that are connected to respective traveling wheels 56 and travel and drive conveyance robot 40 by rotating and driving connected traveling wheels 56. Conveyance robot 40 has four traveling wheels 56 and moves by rotational drive of traveling wheels 56. Traveling wheels 56 may be mecanum wheels or omni wheels that can move vertically and horizontally with four independently driven wheels. Due to the degree of freedom of movement, it is more preferable that traveling wheels 56 be mecanum wheels.

Imaging section 57 is capable of detecting objects around conveyance robot 40 and the distances thereof, as well as reading marker M attached to basket cart 12. Imaging section 57 has first camera 57a and second camera 57b. First and second cameras 57a and 57b are configured as stereo cameras, for example. First camera 57a is provided on the left side of horizontal section 41a and second camera 57b is provided on the left side of upright section 41b. First and second cameras 57a and 57b output image data and distance data to objects around conveyance robot 40 to control section 42.

Distance detection section 58 is capable of detecting the distance to objects around conveyance robot 40. Distance detection section 58 has first distance sensor 58a and second distance sensor 58b. First and second distance sensors 58a and 58b are configured as light detection and ranging (LiDAR), for example. First and second distance sensors 58a and 58b are provided on the front and rear surfaces of horizontal section 41a, respectively. First and second distance sensors 58a and 58b output distance data to objects around conveyance robot 40 and the shape data to control section 42.

Management device 60 is configured as a computer that controls entire conveyance system 1. As shown in Fig. 1, management device 60 has control section 61, storage section 62, communication section 67, and input section 68. Control section 61 has CPU and controls the entire device. Storage section 62 stores various application programs and various data files. Storage section 62 stores ID-specific category information 64, category-specific conveyance area information 63, placement location usage information 65, and map information 66. Category-specific conveyance area information 63 is information in which category of product 17 and the conveyance area are associated with each other. ID-specific category information 64 is information in which the ID of product 17 and the category of product 17 are associated with each other. Placement location usage information 65 is information indicating the occupancy status of the basket cart placement location for each conveyance area. This information is used to manage the conveyance of product 17. Map information 66 is information on the map of store 10. Communication section 67 communicates wirelessly with external devices such as conveyance robot 40. Input section 68 accepts operations by the operator and is, for example, a keyboard or a mouse.

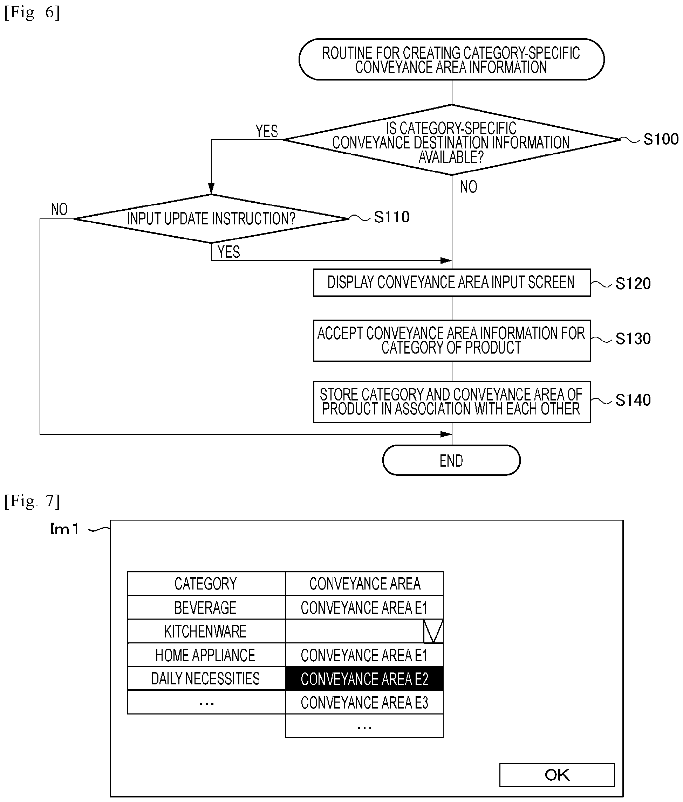

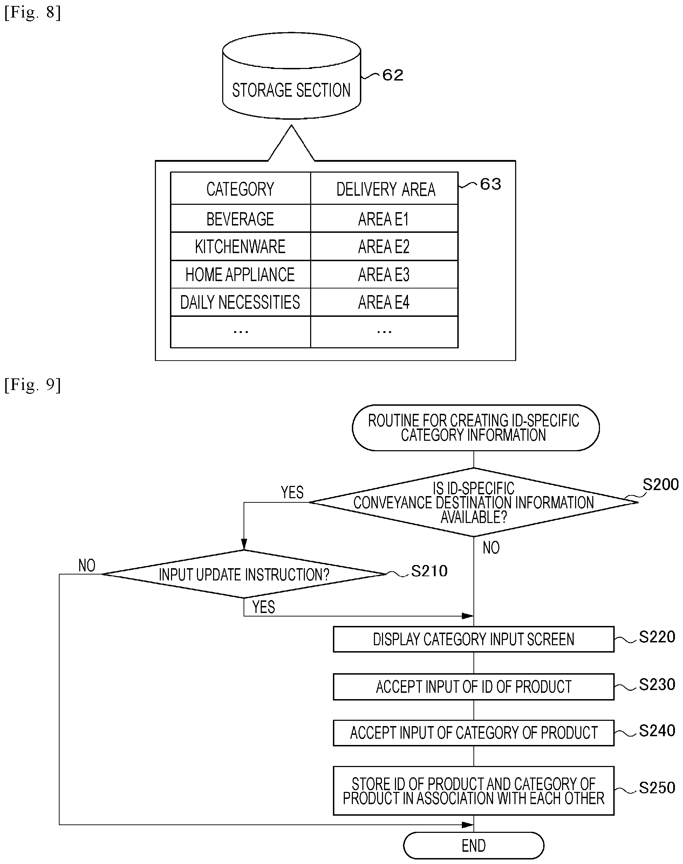

Next, the operation of conveyance system 1 configured as above will be described. First, the process of creating category-specific conveyance area information 63 is described with reference to Figs. 6 to 8. Fig. 6 is a flowchart showing an example of a routine for creating category-specific conveyance area information. Fig. 7 is a view showing an example of screen Im1 for creating category-specific conveyance area information. Fig. 8 is a view showing an example of category-specific conveyance area information 63. The routine for creating category-specific conveyance area information is executed by control section 61 of management device 60 after the operator inputs a start instruction for creating category-specific conveyance area information.

When this routine is started, control section 61 determines whether category-specific conveyance area information 63 is stored in storage section 62 (S100). If a positive determination is made in S100, control section 61 determines whether an update instruction is input from the operator (S110). The update instruction is an instruction to change the correspondence relationship between the category of product 17 and the conveyance area of product 17 in the already created category-specific conveyance area information 63. After a negative determination is made in S100 or a positive determination is made in S110, control section 61 displays screen Im1 for creating category-specific conveyance area information as shown in Fig. 7 on a display device (not shown) (S120). Control section 61 then accepts the input of the conveyance area of product 17 for the category of product 17 (S130). The category of product 17 accepts the operation of the operator and is pre-registered in storage section 62. The conveyance area is input, for example, by the operator selecting from a pull-down menu. Control section 61 then stores the category of product 17 and the conveyance area of product 17 associated with each other in storage section 62 (S140). An example of category-specific conveyance area information 63 created in this way is shown in Fig. 8. After negative determination is made in S110 or after S140, control section 61 ends this routine.

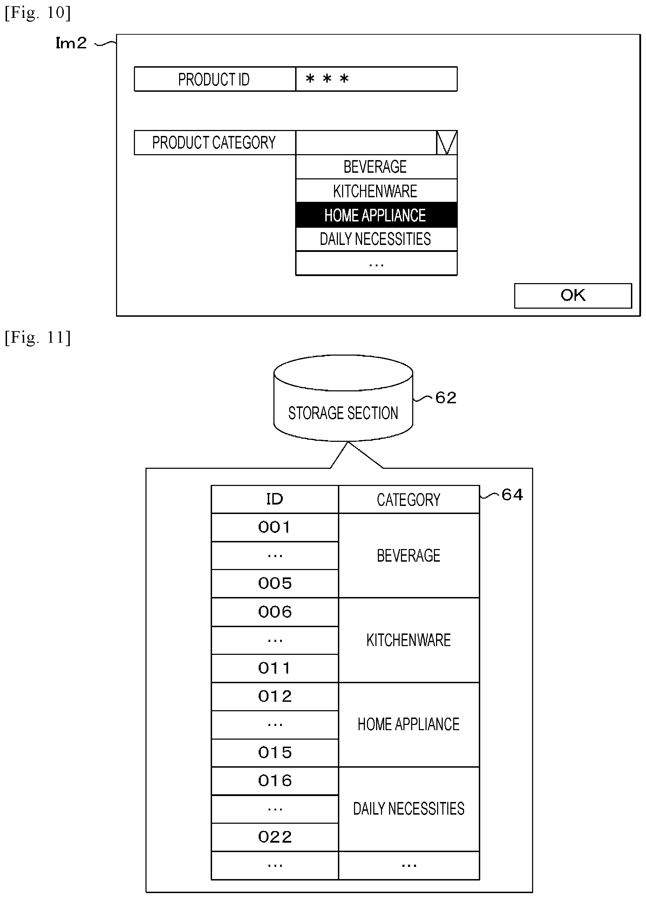

Next, the process of creating ID-specific category information 64 is described with reference to Figs. 9 to 11. Fig. 9 is a flowchart showing an example of a routine for creating ID-specific category information. Fig. 10 is a view showing an example of screen Im2 for creating ID-specific category information. Fig. 11 is a view showing an example of ID-specific category information 64. The routine for creating ID-specific category information is executed by control section 61 of management device 60 after the start instruction for creating ID-specific category information is input by the operator.

When this routine is started, control section 61 determines whether ID-specific category information 64 is stored in storage section 62 (S200). If a positive determination is made in S200, control section 61 determines whether an update instruction is input from the operator (S210). An update instruction is an instruction to change or add the correspondence relationship between the ID of product 17 and the category of product 17 in the already created ID-specific category information 64. After a negative determination is made in S200 or a positive determination is made in S210, control section 61 displays screen Im2 for creating ID-specific category information as shown in Fig. 10 on a display device (not shown) (S220). Control section 61 then accepts input of the ID of product 17 (S230). The ID of product 17 is input, for example, by the operator reading the barcode (not shown) attached to product 17. Control section 61 then accepts input of the category of product 17 (S240). The input of the category of product 17 is performed, for example, by the operator selecting from a pull-down menu. Control section 61 then stores the ID of product 17 and the category of product 17 associated with each other in storage section 62 (S250). An example of ID-specific category information 64 created in this way is shown in Fig. 11. After a negative determination is made in S210 or after S250, control section 61 ends this routine.

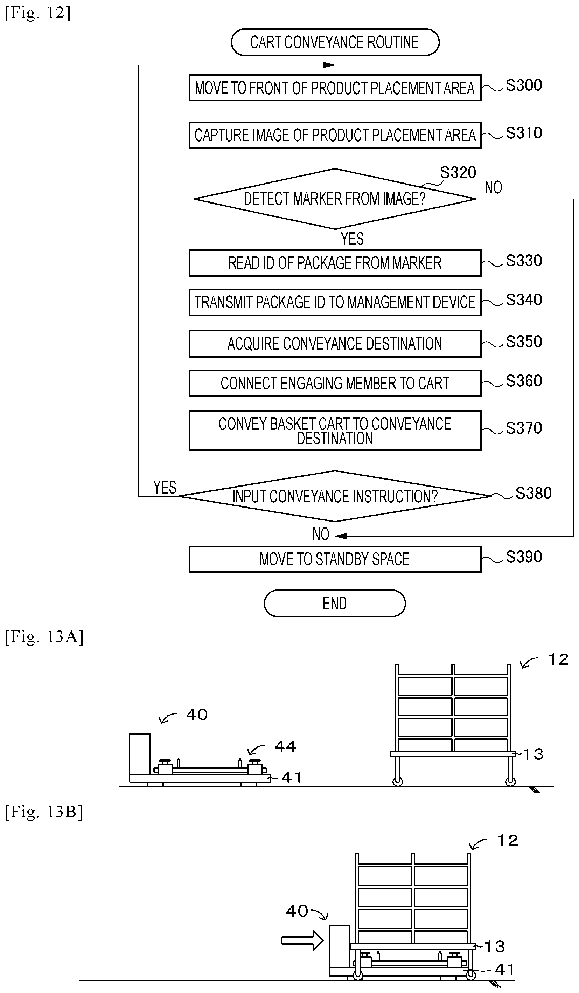

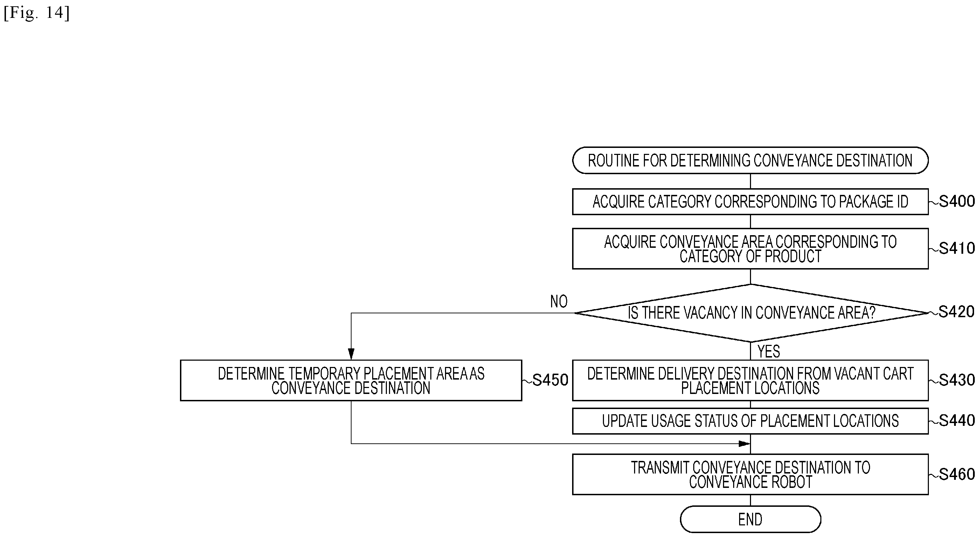

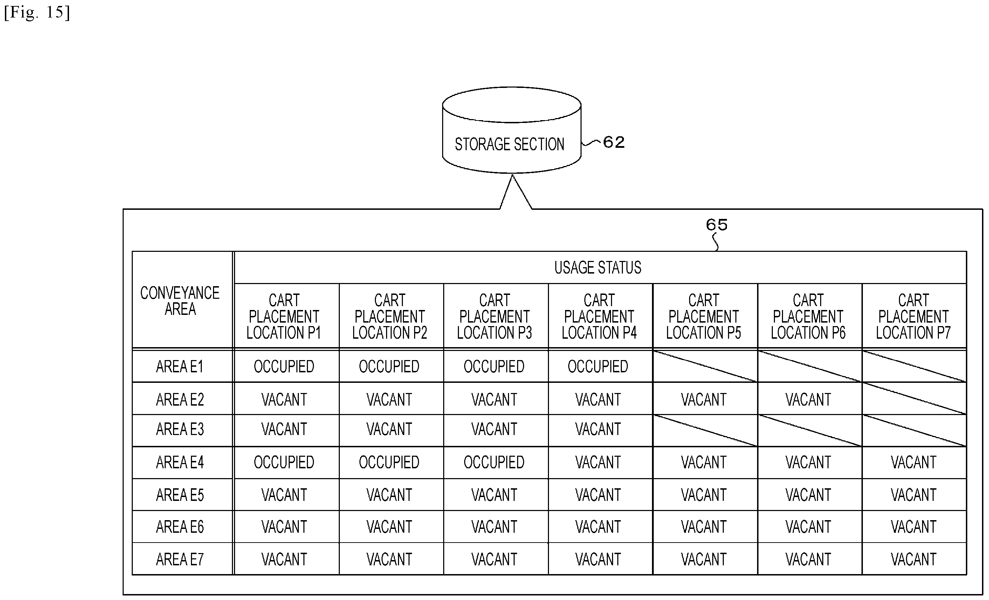

Next, the process of conveying product 17 (basket cart 12) from warehouse 20 to sales section 30 by using conveyance robot 40 in store 10 will be described with reference to Figs. 12 to 15. Fig. 12 is a flowchart showing an example of a cart conveyance routine. Figs. 13A to 13D are views showing how conveyance robot 40 connects to and conveys (tows) basket cart 12. Fig. 14 is a flowchart showing an example of a routine for determining a conveyance destination. Fig. 15 is a view showing an example of placement location usage information 65.

The cart conveyance routine is executed by control section 42 of conveyance robot 40 when control section 42 receives a cart conveyance instruction from control section 61 of management device 60. The cart conveyance instruction is sent via wireless communication to a selected one of conveyance robots 40 among multiple conveyance robots 40. Selection of conveyance robot 40 to be instructed to convey is performed based on the operational status of each of conveyance robots 40.

When this routine is started, control section 42 controls drive section 55 so that conveyance robot 40 moves to the front of product placement area 21, as shown in Fig. 13A (S300). Control section 42 controls drive section 55 so that the estimated self-position moves to the front of product placement area 21 while estimating the self-position in store 10 based on the data input from imaging section 57.

Next, control section 42 causes second camera 57b to capture images of product placement area 21 (S310). Control section 42 then determines whether marker M is detected in the image of product placement area 21 captured in S310 (S320). If a negative determination is made in S320, control section 42 determines that there is no basket cart 12 in product placement area 21, and causes drive section 55 to move the cart to standby space 23. On the other hand, if a positive determination is made in S320, control section 42 determines that there is basket cart 12 in product placement area 21 and reads the ID of product 17 from detected marker M (S330).

Control section 42 then transmits the ID of product 17 read in S330 to management device 60 (S340). Control section 42 then acquires the conveyance destination of product 17 (basket cart 12) from management device 60 (S350). The conveyance destination of product 17 (basket cart 12) is determined by the routine for determining a conveyance destination (see Fig. 14) executed by management device 60.

The routine for determining a conveyance destination, which is executed by control section 61 of management device 60, is described here. This routine is executed after receiving the ID of product 17 from control section 42 of conveyance robot 40.

When this routine is started, control section 61 refers to ID-specific category information 64 shown in Fig. 11 to acquire the category of product 17 corresponding to the ID of product 17 received from control section 42 (S400). Next, control section 61 refers to category-specific conveyance area information 63 shown in Fig. 8 to acquire the conveyance area of product 17 (S410).

Next, control section 61 refers to placement location usage information 65 shown in Fig. 15 to determine whether there are any vacant cart placement locations in the conveyance area acquired in S410 (S420).

If a positive determination is made in S410, a conveyance destination is determined from among the vacant cart placement locations in the conveyance area acquired in S410 (S430). The conveyance area is the area in front of display shelves 31, and the cart placement locations are lined up along the front of display shelves 31. Control section 61 determines the conveyance destination of products 17 (basket carts 12) so that products 17 (basket carts 12) are placed in a predetermined order (in the present embodiment, from the back) at such a cart placement location. This causes at least one product 17 of the same category to be conveyed to one conveyance area by at least one basket cart 12. Also, when there are basket carts 12 already conveyed in the conveyance area, basket carts 12 can be conveyed without interfering with each other.

Control section 61 then updates placement location usage information 65 (S440). Specifically, control section 61 updates the placement location usage information 65 so that the usage status of the placement location determined as the conveyance destination of product 17 (basket cart 12) in S430 becomes "occupied". On the other hand, if a negative determination is made in S420, control section 61 determines temporary placement area 22 as the conveyance destination of product 17 (S450). Control section 61 then transmits the conveyance destination of product 17 (basket cart 12) determined in S430 or S450 to conveyance robot 40 (S460). After S460, control section 61 ends this routine.

Here, a specific example of when the process from S400 to S460 is executed to convey basket cart 12 to temporary placement area 22 or to the conveyance area (cart placement location) is described.

First, the case of conveying basket cart 12 to temporary placement area 22 is described. In this case, marker M on basket cart 12 contains 005 as the ID of product 17. In this case, control section 61 refers to ID-specific category information 64 shown in Fig. 11 to acquire "beverage" as the category of product 17 (S400). Then, control section 61 refers to category-specific conveyance area information 63 shown in Fig. 8 to acquire conveyance area E1 as the conveyance area for product 17 (S410). Next, control section 61 refers to placement location usage information 65 shown in Fig. 15 to determine whether there is a placement location whose usage status is "vacant" in conveyance area E1 (S420). Control section 61 makes a negative determination because there are no placement locations in conveyance area E1 whose usage status is "vacant". Next, control section 61 determines temporary placement area 22 as a conveyance destination (S450) and transmits the determined conveyance destination of product 17 (basket cart 12) to conveyance robot 40 (S460). After S460, control section 61 ends this routine.

Next, the case of conveying basket cart 12 to a cart placement location is described. In this case, marker M on basket cart 12 contains 019 as the ID of product 17. In this case, control section 61 refers to ID-specific category information 64 shown in Fig. 11 to acquire "daily necessities" as the category of product 17 (S400). Then, control section 61 refers to category-specific conveyance area information 63 shown in Fig. 8 to acquire conveyance area E4 as the conveyance area for product 17 (S410). Next, control section 61 refers to placement location usage information 65 shown in Fig. 15 to determine whether there is a placement location whose usage status is "vacant" in conveyance area E4 (S420). Control section 61 makes a positive determination because there is a placement location whose usage status is "vacant" in conveyance area E4. Next, control section 61 refers to map information 66 to determine the conveyance destination in conveyance area E4 at the back (in the present embodiment, cart placement location P4) (S450). Next, control section 61 updates placement location usage information 65 so that the usage status of cart placement location P4 in conveyance area E4 is "occupied" (S440). Control section 61 then transmits the determined conveyance destination of product 17 (basket cart 12) to conveyance robot 40 (S460). After S460, control section 61 ends this routine.

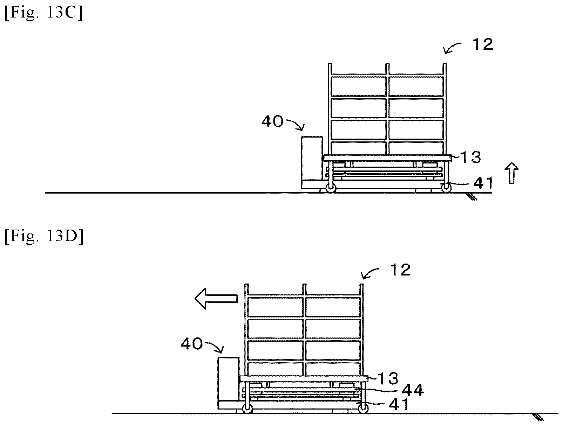

The description is returned to the description of the cart conveyance routine. After acquiring the conveyance destination of product 17 (basket cart 12) from management device 60 (S350), control section 42 connects engaging member 52 to basket cart 12 (S360). This process is executed as follows. That is, first, control section 42 controls drive section 55 so that vehicle body section 41 (horizontal section 41a) dives below basket cart 12 (loading portion 13), as shown in Fig. 13B. Next, control section 42 controls lifting and lowering device 46 so that engaging member 52 is lifted and engages with engaged portion 16, as shown in Fig. 13C.

Next, control section 42 searches for a route from the current location to the conveyance destination based on the map information, and controls drive section 55 so that basket cart 12 is conveyed to the conveyance destination according to the route (see Fig. 13D, S370).

Control section 42 then determines whether other conveyance instructions are input from management device 60 (S380). If a positive determination is made in S380, control section 42 repeats the process from S300 onward. On the other hand, if a positive determination is made in S380, control section 42 causes drive section 55 to move to standby space 23 (S390). After S390, control section 42 ends this routine.

Here, a correspondence relationship between the elements of the present embodiment and the elements of the present disclosure will be clarified. In the present embodiment, conveyance system 1 corresponds to a conveyance system, conveyance robot 40 corresponds to a conveyance device, engaging member 52 and drive section 55 correspond to a drive section, second camera 57b and control section 42 correspond to an acquisition section, and control section 42 corresponds to a control section. In addition, management device 60 corresponds to a determination section, and control section 61 and input section 68 correspond to an update section.

In conveyance system 1 described in detail above, conveyance robot 40 reads the ID of product 17 as identification information from marker M, acquires the category information of product 17 from the read ID of product 17 and the conveyance destination corresponding to the acquired category information, and conveys basket cart 12 to the acquired conveyance destination. Thus, product 17 can be conveyed more efficiently by category. Here, the identification information is information for identifying the category of the conveyance target object (product 17), and includes the ID of the conveyance target object, as well as the name of the conveyance target object and the category information indicating the category of the conveyance target object. The identification information need only be recorded in an optically, magnetically, electrically, or mechanically readable manner, such as a code, tag, or IC chip, in addition to marker M.

In conveyance system 1, a conveyance area of the conveyance destination of product 17 is associated with each category of product 17, one conveyance area has at least one cart placement location where a cart can be parked, and the determination section determines the corresponding conveyance area based on the category information and determines a vacant parking place in the determined conveyance area among the cart placement locations as the conveyance destination. Therefore, at least one product 17 of the same category can be conveyed to one conveyance area by at least one basket cart 12. Also, when there are basket carts 12 already conveyed in the conveyance area, basket carts 12 can be conveyed without interfering with each other. In addition, in the embodiment described above, storage section 62 of management device 60 stores category-specific conveyance area information 63 in which the category of product 17 and the conveyance area are stored in association with each other. Control section 61 updates the correspondence relationship between the category of product 17 and the conveyance area in category-specific conveyance area information 63 in response to receiving an instruction to change the category of product 17 corresponding to the conveyance area from the operator via input section 68. Therefore, it is relatively easy to respond when product 17 belonging to a certain category has to be conveyed to a different conveyance destination from the conventional art.

The present disclosure is not limited to the embodiment described above at all, and needless to say, the present disclosure can be carried out in various forms as long as the forms belong to the technical scope of the present disclosure.

In the embodiment described above, marker M is provided on basket cart 12. However, marker M may be provided on product 17. In this case, marker M may be attached to product 17. Alternatively, an image of the outer box of product 17 (hereinafter, referred to as an outer box image) may be captured to acquire the ID and category of product 17 in question. For example, the ID and category of product 17 need only be acquired by reading the barcode or two-dimensional code on the outer box of product 17 or by reading the text or picture on the outer box of product 17. In the latter case, control section 61 need only determine the delivery destination of product 17 (basket cart 12) as follows. In other words, control section 61 accepts an input from the operator and stores the outer box image of product 17, and the ID and category of product 17 associated with each other in storage section 62 in advance. Control section 61 then inputs the outer box image captured by control section 42 of conveyance robot 40. Next, control section 61 acquires the ID and category of product 17 corresponding to the outer box image of product 17 input from control section 42 by comparing the outer box image of product 17 input from control section 42 with the outer box image of product 17 stored in storage section 62. Control section 61 then executes the routine for determining a conveyance destination of the embodiment described above to determine the conveyance destination of product 17 (basket cart 12). When the category of product 17 is acquired, control section 61 need only execute the process of S410 to S460 of the routine for determining a conveyance destination.

In the embodiment described above, in S230 of the routine for creating ID-specific category information, the ID of product 17 is input by the operator by reading the barcode of product 17. However, the operator may set the ID of product 17 freely and input the ID of product 17 via input section 68 (keyboard, and the like).

In the embodiment described above, basket cart 12 is towed by conveyance robot 40. However, conveyance robot 40 may lift and convey basket cart 12. In the embodiment described above, conveyance robot 40 is connected to basket cart 12 by engaging engaging member 52 with engaged portion 16. However, conveyance robot 40 does not have to be equipped with engaging member 52, and basket cart 12 does not have to be equipped with engaged portion 16. In this case, conveyance robot 40 may be equipped with a loading portion having a support member that can be lifted and lowered and connected to basket cart 12 when the lifted support member makes contact with the bottom of basket cart 12.

In the embodiment described above, marker M is assumed to contain information indicating the ID of product 17. However, marker M may also contain information indicating the category of product 17. In this case, the routine for creating ID-specific category information does not need to be executed, and ID-specific category information 64 does not need to be stored in storage section 62. In this case, control section 61 need only execute the process of S410 to S460 in the routine for determining a conveyance destination, and determine the conveyance destination of product 17 (basket cart 12) based on the category information acquired from marker M.

In the embodiment described above, second camera 57a is used to capture an image of product placement area 21. However, first camera 57b may be used to capture an image of product placement area 21.

In the embodiment described above, the present disclosure is described as conveyance system 1, but may also be conveyance robot 40 or a conveyance method.

### Reference Signs List

1: conveyance system, 10: store, 12: basket cart, 13: loading portion, 14: caster, 15: fence member, 16: engaged portion, 17: product, 18: delivery vehicle, 20: warehouse, 21: product placement area, 22: temporary placement area, 23: standby space, 24: door, 25: wall portion, 30: sales section, 31: display shelf, 40: conveyance robot, 41: vehicle body section, 41a: horizontal section, 41b: upright section, 42: control section, 43: storage section, 44: loading section, 45: lifting and lowering section, 46: lifting and lowering device, 46a: motor, 47: elastic support member, 51: coupling member, 52: engaging member, 53: communication section, 55: drive section, 56: traveling wheel, 57: imaging section, 57a: first camera, 57b: second camera, 58: distance detection section, 58a: first distance sensor, 58b: second distance sensor, 60: management device, 61: control section, 62: storage section, 63: category-specific conveyance area information, 64: ID-specific category information, 65: placement location usage information, 66: map information, 67: communication section, 68: input section, E1 to E7: conveyance area, Im1: screen for creating category-specific conveyance area information, Im2: screen for creating ID-specific category information, M: marker, P1 to P7: cart placement location.

## Claims

1. A conveyance device configured to convey a cart loaded with a conveyance target object, the device comprising:
a drive section configured to be connected to the cart and travel;
a reading section configured to read identification information that is provided on the cart or the conveyance target object and that is for identifying category information of the conveyance target object; and
a control section configured to acquire the category information of the conveyance target object from the identification information read by the reading section, acquire a conveyance destination of the conveyance target object based on the acquired category information, and control the drive section to convey the cart to the acquired conveyance destination.

2. A conveyance system configured to convey a cart loaded with a conveyance target object, the system comprising:
a determination section configured to determine a conveyance destination of the conveyance target object based on category information of the conveyance target object; and
a conveyance device that includes:
a drive section configured to be connected to the cart and travel;
a reading section configured to read identification information that is provided on the cart or the conveyance target object and that is for identifying the category information of the conveyance target object; and
a control section configured to acquire the category information of the conveyance target object from the identification information read by the reading section, acquire a conveyance destination of the conveyance target object determined by the determination section based on the acquired category information, and control the drive section to convey the cart to the acquired conveyance destination.

3. The conveyance system according to Claim 2, wherein
each category is associated with a conveyance area of the conveyance destination of the conveyance target object,
one conveyance area includes at least one parking place where the cart can be parked, and
the determination section is configured to determine a corresponding conveyance area based on the category information, and determine, as the conveyance destination, a vacant parking place among the parking places in the determined conveyance area.

4. The conveyance system according to Claim 2 or 3, wherein
each category is associated with a conveyance area of the conveyance destination of the conveyance target object, and
the system further comprises an update section configured to update a correspondence relationship between the category information and the conveyance area in response to receiving an instruction to change a category corresponding to the conveyance area.

5. A conveyance method for conveying a cart loaded with a conveyance target object, the method comprising:
reading identification information that is provided on the cart or the conveyance target object and that is for identifying category information of the conveyance target object to acquire the category information of the conveyance target object from the identification information;
determining a conveyance destination of the conveyance target object based on the acquired category information; and
conveying the cart to the determined conveyance destination.
